(19) **Europäisches Patentamt / European Patent Office / Office européen des brevets**

(11) **EP 4 654 093 A1**

(12) **EUROPEAN PATENT APPLICATION**
published in accordance with Art. 153(4) EPC

(43) Date of publication:
26.11.2025 Bulletin 2025/48

(21) Application number: 23917401.4

(22) Date of filing: 16.01.2023

(51) International Patent Classification (IPC):
*G06N 20/00* (2019.01)     *G06F 21/57* (2013.01)

(52) Cooperative Patent Classification (CPC):
G06F 21/57; G06N 20/00

(86) International application number:
PCT/JP2023/000967

(87) International publication number:
WO 2024/154186 (25.07.2024 Gazette 2024/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: FUJITSU LIMITED
Kawasaki-shi, Kanagawa 211-8588 (JP)

(72) Inventors:
• YAJIMA, Jun
  Kawasaki-shi, Kanagawa 211-8588 (JP)
• TSUJI, Kentaro
  Kawasaki-shi, Kanagawa 211-8588 (JP)

(74) Representative: Hoffmann Eitle
Patent- und Rechtsanwälte PartmbB
Arabellastraße 30
81925 München (DE)

(54) **GENERATION PROGRAM, GENERATION METHOD, AND INFORMATION PROCESSING DEVICE**

(57) A computer is caused to execute processing of, acquiring tree structure information indicating a structure of an attack tree including pieces of information of a plurality of first nodes each of which is a root node of a plurality of subtrees and with which information indicating an attack that is established is associated and a plurality of second nodes that is hierarchically connected to each of the plurality of first nodes and with which a first condition for establishing the attack is associated, acquiring a damage degree in a case where the attack on each of the plurality of first nodes is established, acquiring a first easiness degree indicating easiness of satisfying the condition associated with each end node among the plurality of second nodes; calculating a second easiness degree indicating easiness of the attack for each of the plurality of first nodes on the basis of the tree structure information and the first easiness degree, calculating, for each of the plurality of first nodes, priority for taking a countermeasure against the attack on the basis of the damage degree and the second easiness degree, and outputting the priority and information indicating the subtree including the first node corresponding to the priority.

FIG.11

```
                    START
                      │
┌─────────────────────────────────────────────┐
│ CONSTRUCT ATTACK TREE BY EXPERT AND STORE    │
│ TREE STRUCTURE INFORMATION AND EASINESS      │~S1
│ DEGREE INFORMATION                           │
└─────────────────────────────────────────────┘
                      │
┌─────────────────────────────────────────────┐
│ DETERMINE ESTABLISHMENT STATUSES OF LEAVES   │
│ OF ATTACK TREE BY ANALYST AND GENERATE       │~S2
│ CONDITION MATCHING STATUS INFORMATION        │
└─────────────────────────────────────────────┘
                      │
┌─────────────────────────────────────────────┐
│ CALCULATE DAMAGE DEGREE BY ANALYST           │~S3
└─────────────────────────────────────────────┘
                      │
┌─────────────────────────────────────────────┐
│ CALCULATE ATTACK EASINESS DEGREE FOR EACH    │
│ SUBTREE BY USING EASINESS DEGREE INFORMATION,│~S4
│ CONDITION MATCHING STATUS INFORMATION, AND   │
│ TREE STRUCTURE INFORMATION                   │
└─────────────────────────────────────────────┘
                      │
┌─────────────────────────────────────────────┐
│ CALCULATE SUBTREE PRIORITY BY USING DAMAGE   │
│ DEGREE INFORMATION AND ATTACK EASINESS       │~S5
│ DEGREE OF EACH SUBTREE                        │
└─────────────────────────────────────────────┘
                      │
┌─────────────────────────────────────────────┐
│ CREATE AND OUTPUT LIST INDICATING PRIORITY   │~S6
│ OF SUBTREES FOR WHICH COUNTERMEASURE IS TAKEN│
└─────────────────────────────────────────────┘
                      │
                     END
```

EP 4 654 093 A1

## Description

Field

The present invention relates to a generation program, a generation method, and an information processing device.

Background

There is known a technique of estimating predetermined information and recognizing various target objects on the basis of given data by artificial intelligence (AI). In particular, AI implemented by machine learning is drawing a lot of attention. Hereinafter, a system that performs estimation and recognition by using a training model generated by machine learning will be referred to as a machine learning system. There is a risk that various attacks are applied to AI implemented by such a machine learning system.

For example, there is an attack called Adversarial Example. This is an attack that adds an artfully calculated noise to an original image to create an image that is recognized as a target object similar to the original image by a human, but is recognized as another object by the machine learning system to intentionally cause AI to perform erroneous estimation. For example, by adding a noise to an image of a panda, it is possible to generate an image that is seen as a panda by a human, but is classified as a gibbon by using the machine learning system. There are various other methods for attacks on the machine learning system.

As described above, the machine learning system is exposed to many risks caused by various attacks. Therefore, at the time of developing a machine learning system, it is important to analyze security as to what kind of attack can be applied to the machine learning system and consider countermeasures.

As the countermeasures against attacks in the machine learning system, there are roughly two methods, i.e., a method of changing specifications and a method of applying a countermeasure dedicated to an attack to the machine learning system. The method of changing specifications is a method of changing specifications of the machine learning system such that attacks are not performed because the attacks on the machine learning system are closely related to the specifications. As the method of applying a countermeasure dedicated to an attack to the machine learning system, there are a method of retraining a training model such that the training model is unlikely to be successfully attacked, a method of implementing an attack detection method to mitigate damage, and the like. Here, among those, a countermeasure against an adversarial attack by changing the specifications of the machine learning system will be described.

Here, as a security analysis method in general Internet technology (IT) security, there is a method called attack tree analysis. The attack tree analysis is performed in the following procedure. A tree is configured by setting possible damage to a system to be attacked as a top node at the top and branching downward therefrom. Downward branching is set by setting branches and leaves while considering, for each node, a condition under which the node is established. Thus, an attack tree is generated. When the branches and the leaves are set, a condition under which the attack tree is not established is specified. Thus, the specifications of the system can be changed so as not to establish the attack tree. This makes it possible to generate a system having resistance to attacks that cause assumed damage.

In a general attack tree, the structure is not determined at the beginning, and information of each node or branch is set after the specifications are determined. Meanwhile, the types of attacks and damage to the machine learning system are limited. Thus, in a case where the attack tree analysis is performed on the machine learning system, it is possible to generate an attack tree in which information of each node and branch is registered before the specifications of the machine learning system are determined. Therefore, the machine learning system can generate an attack tree in advance and check a condition registered in each node and the specifications in comparison, thereby determining whether or not each attack is established.

As a technique regarding system security, there is a technique of extracting a combination of attack activities to be handled from information regarding an attack path indicating an attack procedure, calculating an evaluation value on the basis of the usefulness of a possible countermeasure against each attack activity and the importance of the combination of attack activities, and determining a countermeasure against each combination of attack activities.

Citation List

Patent Literature

Patent Literature 1: WO 2018/134909 A

Summary

Technical Problem

However, in an attack tree for a machine learning system, when the attack tree is configured for each attack, subtrees indicating a small hierarchy including branches and leaves frequently overlap, for example, an attack tree of another attack is present inside an attack tree of a certain attack, and a nested structure is formed. Further, nodes having the same content are frequently present in a plurality of subtrees. In some cases, it is difficult not to satisfy a condition for a specific node in terms of specifications. For example, in a case where there is a node indicating that a result is output to a user, it is meaningless for the system not to establish the node. Thus, it is difficult not to satisfy the condition of the node. Because the attack tree for the machine learning system has complicated features as described above, it is difficult for general attack tree analysis techniques to prioritize and present which condition is appropriate to be dissatisfied. Therefore, it is difficult to determine an appropriate specification change as a countermeasure against an attack and also to improve the security of the machine learning system.

In a case where the above technique is used, it is possible to obtain evaluation for an attack, but it is difficult to grasp the magnitude of damage and the like caused by the attack, and it is not easy to determine for which attack on an attack tree or subtree a countermeasure is taken. Therefore, it is difficult to determine an appropriate specification change as a countermeasure against an attack and also to improve the security of the machine learning system.

The disclosed technique has been made in view of the above, and an object thereof is to provide a generation program, a generation method, and an information processing device that improve security of a machine learning system. Solution to Problem

The generation program, the generation method, and the information processing device disclosed in this application are, in one aspect, cause a computer to execute process including, acquiring tree structure information indicating a structure of an attack tree including a plurality of subtrees, the attack tree including pieces of information of a plurality of first nodes each of which is a root node of the plurality of subtrees and with which information indicating an attack that is established is associated and a plurality of second nodes that is hierarchically connected to each of the plurality of first nodes and with which a first condition for establishing the attack is associated, acquiring a damage degree in a case where the attack associated with each of the plurality of first nodes is established, acquiring a first easiness degree indicating easiness of satisfying the first condition associated with each end node among the plurality of second nodes, calculating a second easiness degree indicating easiness of the attack for each of the plurality of first nodes based on the acquired tree structure information and the acquired first easiness degree, calculating, for each of the plurality of first nodes, priority for taking a countermeasure against the attack associated with the first node based on the damage degree and the second easiness degree, and, outputting the priority and information indicating the subtree including the first node corresponding to the priority.

Advantageous Effects of Invention

In one aspect, the present invention can improve security of a machine learning system.

Brief Description of Drawings

FIG. 1 is a block diagram of an information processing device.
FIG. 2 illustrates an example of an attack tree.
FIG. 3 is a plan view illustrating an example of tree structure information.
FIG. 4 illustrates an example of easiness degree information.
FIG. 5 illustrates an example of condition matching status information.
FIG. 6 illustrates an example of damage degree information.
FIG. 7 illustrates an example of output information indicating priority of subtrees for which a countermeasure is taken.
FIG. 8 illustrates a subtree attacked in a scenario A1.
FIG. 9 illustrates a subtree attacked in a scenario X5.
FIG. 10 illustrates a subtree attacked in a scenario I2.
FIG. 11 is a flowchart of priority determination processing of subtrees for which a countermeasure against an attack is taken by an information processing device according to an embodiment.
FIG. 12 is a hardware configuration diagram of the information processing device.

Description of Embodiments

Hereinafter, embodiments of a generation program, a generation method, and an information processing device disclosed in the present application will be described in detail with reference to the drawings. The generation program, the generation method, and the information processing device disclosed in the present application are not limited by the following embodiments.

In order to handle an attack on a machine learning system, for example, there is a method of prioritizing and presenting conditions for causing all attack trees to fail. However, when the conditions for causing all attack trees to fail are simply presented, it is needed to select one from two situations, that is, a situation in which all attacks on the machine learning system can be avoided and the machine learning system is secure or a situation in which the machine learning system is vulnerable.

That is, in a case where the conditions for causing all attack trees to fail are simply presented, the machine learning system is secure against all attacks by satisfying all presented condition groups for causing each attack tree to fail. Meanwhile, for example, in a case where even one of the presented conditions for causing each attack tree to fail is not satisfied, the machine learning system is determined as being vulnerable to all attacks analyzed to be attackable. The same applies to each subtree.

However, in security management of the actual machine learning system, it is preferably possible to select to handle an attack on a certain subtree and not to handle an attack on another certain subtree. For example, in a case where it takes too much time and effort for an attack or in a case where damage is small, it may be determined that a countermeasure against the attack on the subtree is not taken. Therefore, a technique according to an embodiment described below prioritizes and presents countermeasures against an attack in consideration of the magnitude of damage and the easiness of the attack.

[First Embodiment]

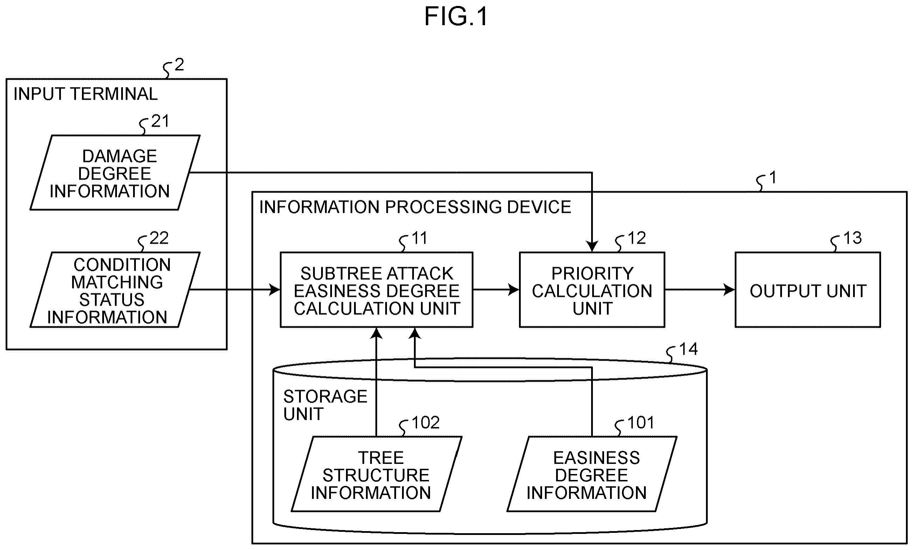

FIG. 1 is a block diagram of an information processing device. An information processing device 1 according to the present embodiment includes a subtree attack easiness degree calculation unit 11, a priority calculation unit 12, an output unit 13, and a storage unit 14.

The storage unit 14 stores in advance tree structure information 101 and easiness degree information 102 determined by an expert in machine learning security. The storage unit 14 is usable by both the subtree attack easiness degree calculation unit 11 and the priority calculation unit 12.

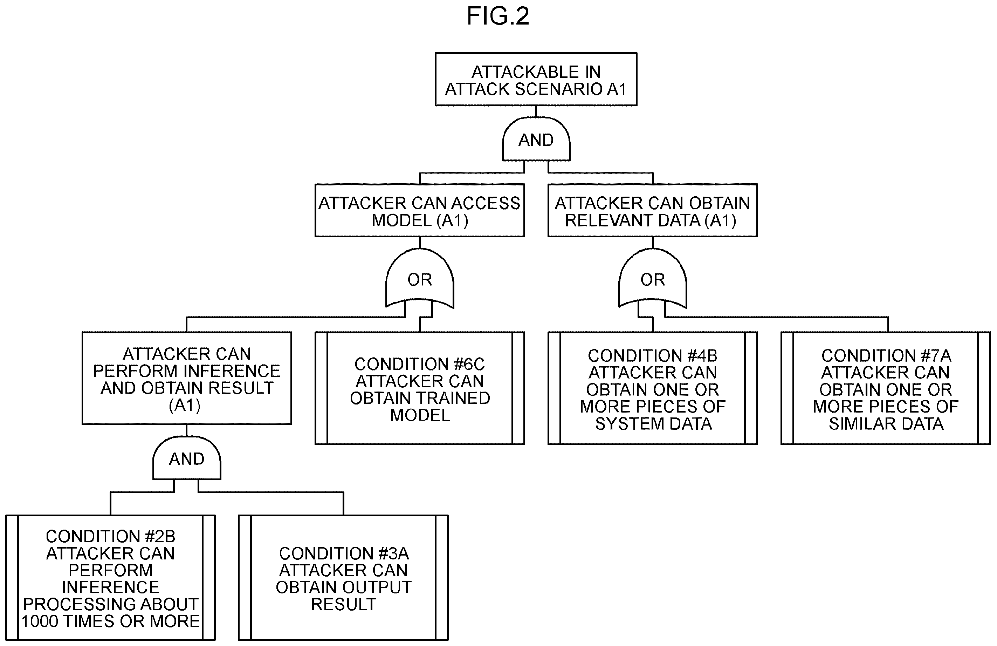

The tree structure information 101 is information indicating a tree structure of an attack tree for a machine learning system whose specifications are to be changed to avoid attacks. FIG. 2 illustrates an example of the attack tree. The attack tree in FIG. 2 is an attack tree in a case where the machine learning system is attacked in a scenario A1. In the attack tree of FIG. 2, a portion described as (A1) represents content of the scenario A1. The scenario refers to an attack algorithm (attack method), and a logical structure of conditions when an attack is performed by the attack algorithm A1 is an attack tree of the scenario A1.

Hereinafter, one attack tree may be referred to as a "tree". The attack tree itself is one subtree and may further include a plurality of subtrees therein. Each subtree has a first node that is a root node of the subtree in the top hierarchy. The first node is associated with information indicating an attack that is established for the subtree. The subtree also includes a plurality of second nodes that is hierarchically connected to the first node and with which a first condition for establishing an attack on the subtree is associated. The second nodes include end nodes of the subtree and operators connecting the end nodes which are logical symbols representing a relationship between conditions.

For example, the attack tree in FIG. 2 includes a plurality of second nodes in which conditions #2B, #3A, #4B, #6C, and #7A for achieving an attack in the scenario A1 indicated by the first node at the top are written. The attack tree in FIG. 2 also includes nodes indicating operation results by the operators. The attack tree may also include a node for achieving another attack scenario included in the attack tree. Hereinafter, the end nodes in which the conditions for achieving the attack described in the first node at the top of the attack tree are written and the node indicating achievement of another attack scenario included in the attack tree will be referred to as "leaves". The logical symbols indicating the relationship between the conditions will be referred to as "branches". The second node serving as a leaf is hierarchically connected to the first node by a branch. A collection of branches and leaves extending downward from a node indicating achievement of a specific attack scenario included in the attack tree will be referred to as a "subtree". That is, the subtree can also be considered as an attack tree against a specific attack described at the top of the subtree. The entire attack tree in FIG. 2 can also be considered as one subtree. In a case where there is a plurality of attack trees for one machine learning system, all or some thereof can be combined into one attack tree.

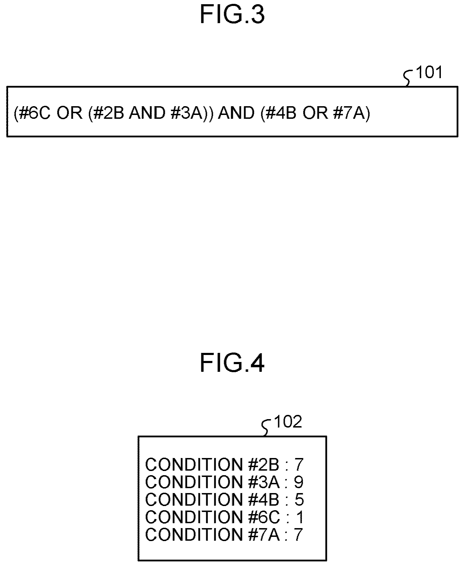

The tree structure information 101 is a logical expression obtained by combining the conditions written in the respective leaves by using a logical condition indicated by a branch. For example, the tree structure information 101 indicating the attack tree in FIG. 2 is represented by a logical expression in FIG. 3 when each condition is represented as a sign. FIG. 3 illustrates an example of the tree structure information. The attack tree for the machine learning system can be created in advance, and thus the tree structure information 101 is created in advance by an expert, is input to the information processing device 1, and is stored in the storage unit 14. One or a plurality of attack trees may be provided, and thus one or more pieces of the tree structure information 101 are created in accordance with the number of attack trees and are stored in the storage unit 14.

The easiness degree information 102 is information indicating an easiness degree given to each leaf. The easiness degree of each leaf is information indicating how easy it is for an attacker to establish the leaf, in other words, to set the leaf to TRUE. In the present embodiment, the easiness degree information 102 is given in advance by the expert and is stored in the storage unit 14. However, the easiness degree information 102 may be given by an analyst at the time of analysis.

FIG. 4 illustrates an example of the easiness degree information. In FIG. 4, the easiness degree information 102 is represented by a value of 1 to 10 and indicates that the attack is easier as the number is larger. For example, the easiness degree information 102 in FIG. 4 indicates that, regarding the attack tree in FIG. 2, the easiness degree of the condition #2B is 7, the easiness degree of the condition #3A is 9, the easiness degree of the condition #4B is 5, the easiness degree of the condition #6C is 1, and the easiness degree of the condition #7A is 7. The easiness degree is set to 1 to 10 in the present embodiment, but the easiness degree is not necessarily limited to this range as long as the easier condition is indicated by a larger value.

The subtree attack easiness degree calculation unit 11 acquires the tree structure information 101 and the easiness degree information 102 of each attack tree from the storage unit 14. The subtree attack easiness degree calculation unit 11 further acquires condition matching status information 22 input by the analyst using an input terminal 2.

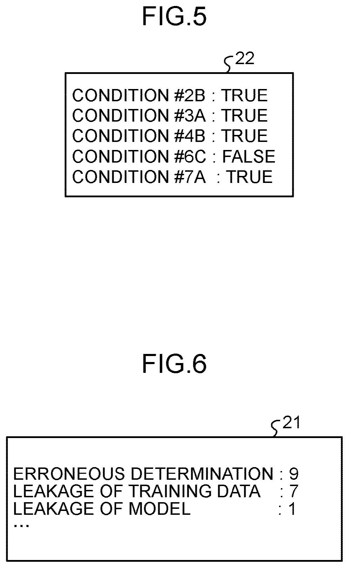

FIG. 5 illustrates an example of the condition matching status information. For example, as illustrated in FIG. 5, the condition matching status information 22 for the attack tree in FIG. 2 stores information indicating whether or not each of the conditions #2B, #3A, #4B, #6C, and #7A is satisfied in the current specifications of the machine learning system. The condition matching status information 22 in FIG. 5 indicates that the conditions #2B, #3A, #4B, and #7A are satisfied, whereas the condition #6C is not satisfied.

Next, the subtree attack easiness degree calculation unit 11 calculates the attack easiness degree for each subtree by using the easiness degree information 102 and the condition matching status information 22. Hereinafter, there will be described a method of calculating the attack easiness degree for each subtree by calculating the easiness degree from the leaves to the top by the subtree attack easiness degree calculation unit 11 according to the present embodiment.

The subtree attack easiness degree calculation unit 11 has the following Mathematical Expression (1) as a calculation expression of the easiness degree of a branch whose logical expression is AND in a case where connection is made by the branch.

$$(1) \quad Y1 - ((L - Y2)/L) \times Y1$$

The subtree attack easiness degree calculation unit 11 also has the following Mathematical Expression (2) as a calculation expression of the easiness degree of a branch whose logical expression is OR in a case where connection is made by the branch.

$$(2) \quad Y1 + (Y2/L) \times (L - Y1)$$

A case where connection is made by the branch whose logical expression is AND will be described. The subtree attack easiness degree calculation unit 11 sorts the easiness degrees of leaves or nodes connected to the target branch in ascending order.

Next, the subtree attack easiness degree calculation unit 11 extracts the minimum easiness degree and substitutes the extracted minimum easiness degree into Y1 of Mathematical Expression (1). Next, the subtree attack easiness degree calculation unit 11 extracts the minimum easiness degree from the remaining easiness degrees and substitutes the extracted minimum easiness degree into Y2 of Mathematical Expression (1). Then, the subtree attack easiness degree calculation unit 11 calculates the easiness degree by calculating Mathematical Expression (1) after the substitution. Thereafter, in a case where unused easiness degrees remain in the sorted data, the subtree attack easiness degree calculation unit 11 substitutes the calculated easiness degree into Y1, substitutes the minimum easiness degree among the remaining easiness degrees into Y2, and repeats calculation of the easiness degree. In a case where all the easiness degrees of the sorted data are used, the subtree attack easiness degree calculation unit 11 sets the calculated easiness degree as the easiness degree of a higher-level node in the hierarchy to which the target branch is connected. L represents the easiest easiness degree and is 10 in this example.

For example, a case where the easiness degrees of the leaves and nodes connected to the target branch are (5,9, 3, 5) will be described. The subtree attack easiness degree calculation unit 11 sorts the easiness degrees as (3,5, 5, 9). In the first calculation, the subtree attack easiness degree calculation unit 11 substitutes 3 into Y1. The subtree attack easiness degree calculation unit 11 also substitutes 5 into Y2. Then, the subtree attack easiness degree calculation unit 11 calculates the easiness degree as 3 - ((10 - 5)/10) × 3 = 1.5. In the second calculation, the subtree attack easiness degree calculation unit 11 substitutes 1.5 into Y1. The subtree attack easiness degree calculation unit 11 also substitutes 5 into Y2. Then, the subtree attack easiness degree calculation unit 11 calculates the easiness degree as 1.5 - ((10 - 5)/10) × 1.5 = 0.75. In the third calculation, the subtree attack easiness degree calculation unit 11 substitutes 0.75 into Y1. The subtree attack easiness degree calculation unit 11 also substitutes 9 into Y2. Then, the subtree attack easiness degree calculation unit 11 calculates the easiness degree as 0.75 - ((10 - 9)/10) × 0.75 = 0.675. Because all the easiness degrees of the sorted data are used at this time, the subtree attack easiness degree calculation unit 11 sets 0.675 as the easiness degree of a higher-level node in the hierarchy to which the target branch is connected.

Here, in a case where a condition matching status of the leaf is FALSE, the subtree attack easiness degree calculation unit 11 sets the easiness degree of the leaf to 0. This is because, if the leaf condition matching status is FALSE, the condition of the leaf is not satisfied. In this case, because the calculation result using Mathematical Expression (1) is 0, the subtree attack easiness degree calculation unit 11 determines the easiness degree of the higher-level node in the hierarchy to which the target branch is connected as 0 without performing any further calculation.

Next, a case where connection is made by the branch whose logical expression is OR will be described. The subtree attack easiness degree calculation unit 11 sorts the easiness degrees of leaves connected to the target branch or the easiness degrees calculated for branches connected to the target branch in descending order.

Next, the subtree attack easiness degree calculation unit 11 extracts the maximum easiness degree and substitutes the extracted maximum easiness degree into Y1 of Mathematical Expression (2). Next, the subtree attack easiness degree calculation unit 11 extracts the maximum easiness degree from the remaining easiness degrees and substitutes the extracted maximum easiness degree into Y2 of Mathematical Expression (2). Then, the subtree attack easiness degree calculation unit 11 calculates the easiness degree by calculating Mathematical Expression (2) after the substitution. Thereafter, in a case where unused easiness degrees remain in the sorted data, the subtree attack easiness degree calculation unit 11 substitutes the calculated easiness degree into Y1, substitutes the maximum easiness degree among the remaining easiness degrees into Y2, and repeats calculation of the easiness degree. In a case where all the easiness degrees of the sorted data are used, the subtree attack easiness degree calculation unit 11 sets the calculated easiness degree as the easiness degree of a higher-level node in the hierarchy to which the target branch is connected. Also in this case, in a case where the condition matching status of the leaf is FALSE, the subtree attack easiness degree calculation unit 11 sets the easiness degree of the leaf to 0 and performs the above calculation.

The subtree attack easiness degree calculation unit 11 repeats the above calculation up to the top node of the subtree. Then, the subtree attack easiness degree calculation unit 11 determines the easiness degree calculated for the top node as the attack easiness degree of the subtree.

Here, the subtree attack easiness degree calculation unit 11 may calculate the attack easiness degree of the subtree by using a method other than the calculation method described above. For example, the subtree attack easiness degree calculation unit 11 can use another easiness degree calculation method in which the easiness degree is equal to or more than the highest easiness degree in the branch OR and is equal to or less than the lowest easiness degree in the branch AND.

For example, the subtree attack easiness degree calculation unit 11 may calculate the easiness degree of a subtree on the basis of the number of leaves in the subtree. The subtree attack easiness degree calculation unit 11 may count the number of leaves and calculate the attack easiness degree of the subtree such that a numerical value of the easiness degree is smaller as the number of leaves is larger. For example, when the number of leaves is X, the subtree attack easiness degree calculation unit 11 can set the attack easiness degree = 1/X and the attack easiness degree = 20 - X.

The subtree attack easiness degree calculation unit 11 may also determine the easiness degree of the node to which the branch is connected by using the maximum value and the minimum value of the easiness degree. For example, in a case where the target branch is OR, the subtree attack easiness degree calculation unit 11 sets the maximum value among the easiness degrees of the connected leaves and branches as the easiness degree of the node to which the target branch is connected. Further, in a case where the target branch is AND, the subtree attack easiness degree calculation unit 11 sets the minimum value among the easiness degrees of the connected leaves and branches as the easiness degree of the node to which the target branch is connected.

The subtree attack easiness degree calculation unit 11 may also determine the easiness degree of the node to which the branch is connected by using an average value of the easiness degrees. For example, in a case where the target branch is OR, the subtree attack easiness degree calculation unit 11 sets the average of the easiness degrees of the connected leaves and branches as the easiness degree of the node to which the target branch is connected. Further, in a case where the target branch is AND, the subtree attack easiness degree calculation unit 11 sets a value obtained by subtracting the average of the easiness degrees of the connected leaves and branches from a predetermined number as the easiness degree of the node to which the target branch is connected. For example, the subtree attack easiness degree calculation unit 11 sets a value obtained by adding the easiness degree as X. Then, the subtree attack easiness degree calculation unit 11 calculates the easiness degree of the node to which the branch is connected in a case of OR as $(X/(10 \times$ the number of elements$)) \times 10$. Further, the subtree attack easiness degree calculation unit 11 calculates the easiness degree of the node to which the branch is connected in a case of AND as $10 - (X/(10 \times$ the number of elements$)) \times 10$. Here, the number of elements is the number of leaves and branches connected to the target branch, that is, the number of easiness degrees.

The subtree attack easiness degree calculation unit 11 may also determine the easiness degree of the node to which the branch is connected by using the sum of the easiness degrees. For example, in a case where the target branch is OR, the subtree attack easiness degree calculation unit 11 sets the sum of the easiness degrees of connected leaves and lower nodes as the easiness degree of the node to which the target branch is connected. Further, in a case where the target branch is AND, the subtree attack easiness degree calculation unit 11 sets a value obtained by subtracting the average of the easiness degrees of the connected leaves and lower nodes from a predetermined number as the easiness degree of the node to which the target branch is connected. For example, the subtree attack easiness degree calculation unit 11 sets a value obtained by adding the easiness degree as X. Then, the subtree attack easiness degree calculation unit 11 calculates the easiness degree of the node to which the branch is connected in a case of OR as X. Further, the subtree attack easiness degree calculation unit 11 calculates the easiness degree of the node to which the branch is connected in a case of AND as $10 - (X/(10 \times$ the number of elements$)) \times 10$.

In addition, the subtree attack easiness degree calculation unit 11 may acquire the attack easiness degree of each subtree calculated by the expert.

The subtree attack easiness degree calculation unit 11 calculates the attack easiness for all subtrees included in the attack tree for the machine learning system. Then, the subtree attack easiness degree calculation unit 11 outputs the calculated attack easiness degree of each subtree to the priority calculation unit 12.

Returning to FIG. 1, the description will be continued. The priority calculation unit 12 acquires the tree structure information 101 of each attack tree from the storage unit 14. The priority calculation unit 12 also acquires information regarding the attack easiness degree of each subtree calculated by the subtree attack easiness degree calculation unit 11.

The priority calculation unit 12 further acquires damage degree information 21 and the condition matching status information 22 input by the analyst using the input terminal 2.

The damage degree information 21 is information indicating the magnitude of damage for each type of damage. The type of damage corresponds to each damage caused by an attack on each subtree. In other words, the damage degree information 21 is information numerically indicating what magnitude of damage the machine learning system receives from the attack indicated by the subtree. The damage degree information 21 is given for each subtree.

The magnitude of damage is obtained by using an impact analysis (damage analysis) technique such as failure mode and effect analysis (FMEA). For example, in a case where erroneous determination occurs due to an attack on a certain subtree, the analyst can determine that, when erroneous determination occurs in the target machine learning system, the erroneous determination affects human life and thus the damage is serious. Further, in a case where training data leaks due to an attack on a certain subtree, the analyst can determine that there is almost no damage even if the training data leaks because public data is used as the training data.

Then, the analyst creates the damage degree information 21 by numerically indicating the magnitude of damage for each determined type of damage. FIG. 6 illustrates an example of the damage degree information. For example, the damage degree information 21 in FIG. 6 is represented by a value of 0 to 10 and indicates that the damage is larger as the value is larger. The damage degree information is not necessarily limited to this range as long as larger damage is indicated by a larger value. The damage degree information 21 in FIG. 6 includes information regarding the following magnitude of damage. For example, the damage degree of a subtree whose damage is leakage of a model is 7. The damage degree of a subtree whose damage is erroneous determination is 9. The damage degree of a subtree whose damage is leakage of training data is 1. In a case of a structure in which a subtree is further included in a subtree, the damage degrees of other subtrees may be unified to the damage degree of the top subtree.

The priority calculation unit 12 has information regarding the type of damage that occurs in a case where an attack is established for each subtree. The priority calculation unit 12 extracts a subtree in which the attack is established by using the condition matching status information 22. Next, for each extracted subtree in which the attack is established, the priority calculation unit 12 determines the magnitude of damage by using the damage degree information 21. Next, for each subtree in which the attack is established, the priority calculation unit 12 multiplies the value of the attack easiness degree of the subtree by the value of the magnitude of damage to calculate subtree priority of each subtree. Here, the subtree priority indicates that a countermeasure against the attack is prioritized as the value is larger. That is, the priority calculation unit 12 determines the subtree priority such that an attack on a subtree that is attacked more easily and whose damage is larger is preferentially set as a target for which a countermeasure is taken.

Thereafter, the priority calculation unit 12 sorts the subtrees in descending order of the subtree priority. Then, the priority calculation unit 12 notifies the output unit 13 of information regarding the sorted subtrees.

Here, in the present embodiment, the subtree priority of each subtree is calculated by multiplying the value of the attack easiness degree of the subtree by the value of the magnitude of damage, but the priority calculation unit 12 may calculate the subtree priority in consideration of which one of the attack easiness degree and the magnitude of damage is to be regarded as important. In that case, the priority calculation unit 12 can calculate the subtree priority by using the weighted average in the multiplication of the value of the attack easiness degree and the value of the magnitude of damage for each subtree.

For example, the priority calculation unit 12 acquires information indicating which value is regarded as important and how much the value is regarded as important. The priority calculation unit 12 may acquire information input by the analyst using the input terminal 2 or may acquire information stored in advance in the storage unit 14.

As an example, there will be described a case where the value of the attack easiness degree of a certain subtree is 5.1, the magnitude of damage is 6.1, an importance degree of the attack easiness degree is 0.3, and the importance degree of the magnitude of damage is 0.7. Here, a result of adding both the importance degrees is set to 1, but the present invention is not limited thereto, and each independent importance degree may be set. In this case, the priority calculation unit 12 sets $5.1 \times 0.3 + 6.1 \times 0.7 = 5.8$ as the subtree priority of the subtree.

The output unit 13 receives a notification of information regarding the subtrees sorted in descending order of the subtree priority from the priority calculation unit 12. Then, the output unit 13 outputs information indicating the priority of the subtrees for which a countermeasure is taken to a monitor or the like and presents the information to a user. For example, the output unit 13 creates a list indicating the priority of the subtrees for which a countermeasure against an attack is taken and displays the list on the monitor.

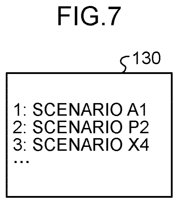

FIG. 7 illustrates an example of output information indicating the priority of subtrees for which a countermeasure is taken. For example, the output unit 13 displays a list 130 in FIG. 7 on the monitor. In this case, a subtree corresponds to each scenario, and the user can determine which countermeasure for a subtree is prioritized from information of the scenarios in the list 130.

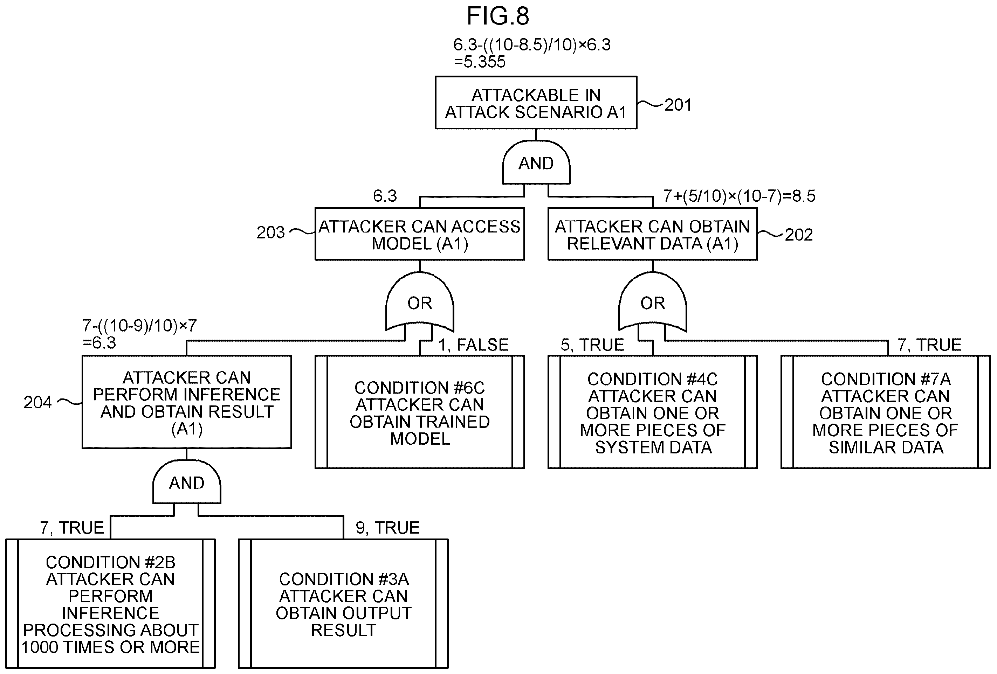

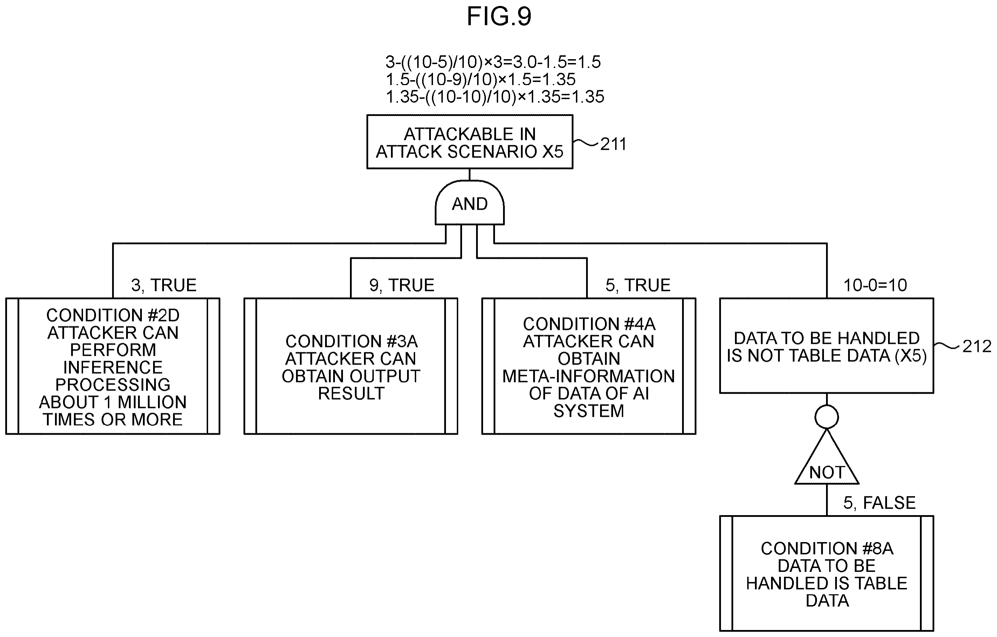

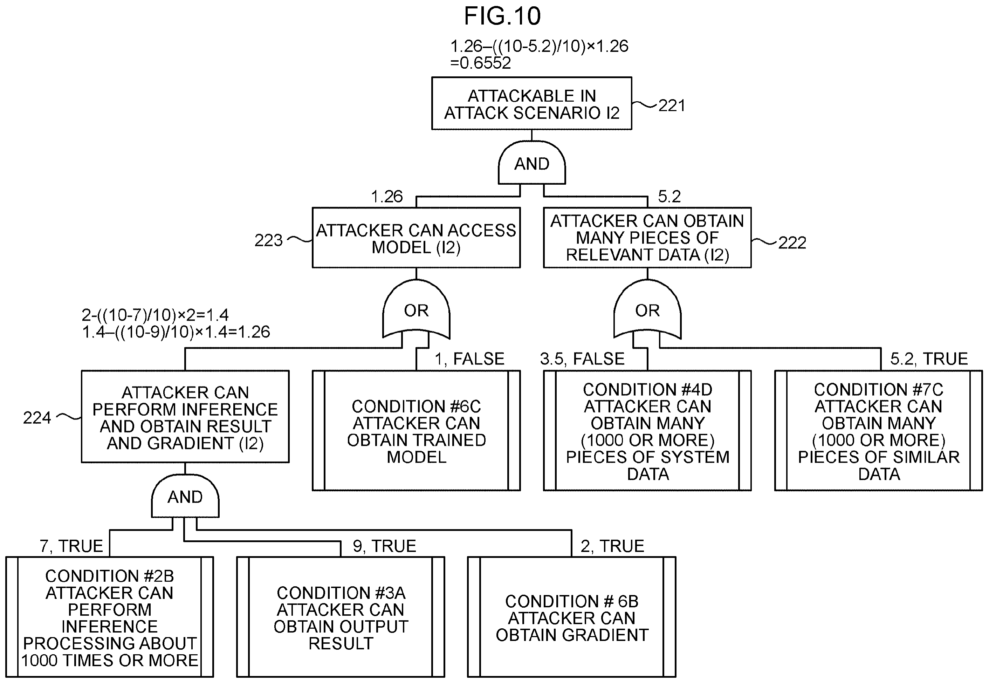

FIG. 8 illustrates a subtree attacked in a scenario A1. FIG. 9 illustrates a subtree attacked in a scenario X5. FIG. 10 illustrates a subtree attacked in a scenario I2. Hereinafter, the subtree in FIG. 8 will be referred to as a subtree A1, the subtree in FIG. 9 will be referred to as a subtree X5, and the subtree in FIG. 10 will be referred to as a subtree I2. Next, processing of determining the subtree priority will be collectively described with reference to FIGS. 8 to 10.

Here, the easiness degree of each leaf of the subtrees A1, X5, and I2 is given as follows. The easiness degree of the condition #2B is 7. The easiness degree of the condition #2D is 3. The easiness degree of the condition #3A is 9. The easiness degree of the condition #4A is 5. The easiness degree of the condition #4C is 5. The easiness degree of the condition #4D is 3.5. The easiness degree of the condition #6B is 2. The easiness degree of the condition #6C is 1. The easiness degree of the condition #7A is 7. The easiness degree of the condition #7C is 5.2. The easiness degree of the condition #8A is 5.

Further, the establishment situation of the leaf is as follows. The condition #2B is TRUE. The condition #2D is TRUE. The condition #3A is TRUE. The condition #4A is TRUE. The condition #4C is TRUE. The condition #4D is FALSE. The condition #6B is TRUE. The condition #6C is FALSE. The condition #7A is TRUE. The condition #7C is TRUE. The condition #8A is FALSE.

In FIGS. 8 to 10, the easiness degree and the establishment condition are described on a part above each leaf on the paper surface. Further, a calculation expression and a calculation result of the easiness degree are described on a part above each node other than the leaves.

Here, a case where the damage degree of the subtree A1 is 6, the damage degree of the subtree X5 is 4, and the damage degree of the subtree I2 is 5 will be described.

The subtree priority of the subtree A1 in FIG. 8 will be described. The leaf of the condition #2B and the leaf of the condition #3A are connected to the branch AND, and the branch is connected to a node 204. Therefore, the subtree attack easiness degree calculation unit 11 calculates the easiness degree of the node 204 as $7 - ((10 - 9)/10) \times 7 = 6.3$. Because the condition #6C is FALSE, the subtree attack easiness degree calculation unit 11 sets the easiness degree of the condition #6C to 0. Next, the node 204 and the leaf of the condition #6C are connected to the branch OR, and the branch is connected to a node 203. Because the easiness degree of the condition #6C is 0, the subtree attack easiness degree calculation unit 11 calculates the easiness degree of the node 203 as 6.3. The leaf of the condition #4C and the leaf of the condition #7A are connected to the branch OR, and the branch is connected to a node 202. Therefore, the subtree attack easiness degree calculation unit 11 calculates the easiness degree of the node 202 as $7 + (5/10) \times (10 - 7) = 8.5$. Next, the node 202 and the node 203 are connected to the branch AND, and the branch is connected to a top node 201. Therefore, the subtree attack easiness degree calculation unit 11 calculates the easiness degree of the node 201 as $6.3 - ((10 - 8.5)/10) \times 6.3 = 5.335$ and sets this as the attack easiness degree of the subtree A1.

The priority calculation unit 12 confirms establishment of an attack on the subtree A1. Further, the priority calculation unit 12 acquires 6 as the damage degree of the subtree A1. Then, the priority calculation unit 12 calculates the subtree priority of the subtree A1 as $5.355 \times 6 = 32.13$.

Next, the subtree priority of the subtree X5 in FIG. 9 will be described. The leaf of the condition #8A is connected to a branch NOT, and the branch is connected to a node 212. In a case where the logical expression of the target subtree is NOT, the subtree attack easiness degree calculation unit 11 subtracts the easiness degree of the connected leaf or node from the maximum value of the easiness degree to calculate the easiness degree of the node to which the target subtree is connected. Therefore, because the leaf of the condition #8A is FALSE, the subtree attack easiness degree calculation unit 11 calculates the easiness degree of the node 212 as $10 - 0 = 0$. Next, the leaf of the condition #2D, the leaf of the condition #3A, the leaf of the condition #4A, and the node 212 are connected to the branch AND, and the branch is connected to a node 201. Therefore, the subtree attack easiness degree calculation unit 11 performs the first calculation "$3 - ((10 - 5)/10) \times 3 = 1.5$" by using the lowest easiness degree and the second lowest easiness degree. Next, the subtree attack easiness degree calculation unit 11 performs the second calculation "$1.5 - ((10 - 9)/10) \times 1.5 = 1.35$" by using the calculated value and the lowest one of the remaining easiness degrees. Next, the subtree attack easiness degree calculation unit 11 performs the third calculation "$1.35 - ((10 - 10)/10) \times 1.35 = 1.35$" by using the calculated value and the final easiness degree. Thus, because all the easiness degrees of the leaves and nodes connected to the target subtree are used, the subtree attack easiness degree calculation unit 11 determines the easiness degree of the node 211 as 1.35 and sets this as the attack easiness degree of the subtree X5.

The priority calculation unit 12 confirms establishment of an attack on the subtree X5. Further, the priority calculation unit 12 acquires 4 as the damage degree of the subtree X5. Then, the priority calculation unit 12 calculates the subtree priority of the subtree X5 as $1.35 \times 4 = 5.4$.

Next, the subtree priority of the subtree I2 in FIG. 10 will be described. The leaf of the condition #2B, the leaf of the condition #3A, and the leaf of the condition #6B are connected to the branch AND, and the branch is connected to a node 224. Therefore, the subtree attack easiness degree calculation unit 11 performs the first calculation "$2 - ((10 - 7)/10) \times 2 = 1.4$" by using the lowest easiness degree and the second lowest easiness degree. Next, the subtree attack easiness degree calculation unit 11 performs the second calculation "$1.4 - ((10 - 9)/10) \times 1.4 = 1.26$" by using the calculated value and the lowest one of the remaining easiness degrees. Thus, because all the easiness degree of the leaves and node connected to the target subtree are used, the subtree attack easiness degree calculation unit 11 determines the easiness degree of the node 224 as 1.26. Because the condition #6C is FALSE, the subtree attack easiness degree calculation unit 11 sets the easiness degree of the condition #6C to 0. Next, the node 224 and the leaf of the condition #6C are connected to the branch OR, and the branch is connected to a node 223. Because the easiness degree of the condition #6C is 0, the subtree attack easiness degree calculation unit 11 calculates the easiness degree of the node 223 as 1.26. Because the condition #4D is FALSE, the subtree attack easiness degree calculation unit 11 sets the easiness degree of the condition #4D to 0. Next, the leaf of the condition #4D and the leaf of the condition #7C are connected to the branch OR, and the branch is connected to a node 222. Because the easiness degree of the condition #4D is 0, the subtree attack easiness degree calculation unit 11 calculates the easiness degree of the node 222 as 5.2. Further, the node 222 and the node 223 are connected to the branch AND, and the branch is connected to a top node 221. Therefore, the subtree attack easiness degree calculation unit 11 calculates the easiness degree of the node 221 as $1.26 - ((10 - 5.2)/10) \times 1.26 = 0.6552$ and sets this as the attack easiness degree of the subtree I2.

The priority calculation unit 12 confirms establishment of an attack on the subtree I2. Further, the priority calculation unit 12 acquires 5 as the damage degree of the subtree I2. Then, the priority calculation unit 12 calculates the subtree priority of the subtree I2 as $0.6552 \times 5 = 3.276$.

The priority of the subtree A1 is 32.13, the priority of the subtree X5 is 5.4, and the priority of the subtree I2 is 3.276, and thus the priority calculation unit 12 sorts the subtrees in order of priority and sets the subtrees A1, X5, and I2 in this order as the priority of taking a countermeasure against an attack.

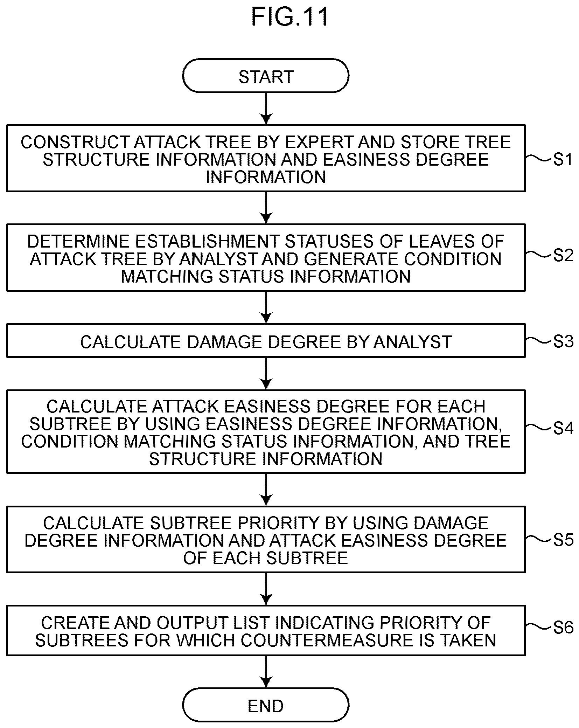

FIG. 11 is a flowchart of priority determination processing of subtrees for which a countermeasure against an attack is taken by the information processing device according to the embodiment. Next, a flow of the priority determination processing of subtrees for which a countermeasure against an attack is taken by the information processing device 1 according to the embodiment will be described with reference to FIG. 11.

The expert constructs an attack tree for a target machine learning system. Then, the tree structure information 101 and the easiness degree information 102 are stored in the storage unit 14 by the expert (step S1).

Next, the analyst determines establishment statuses of leaves of each attack tree. Then, the analyst generates the condition matching status information 22 by using the input terminal 2 (step S2).

Further, the analyst calculates the damage degree in the target machine learning system for each type of damage and generates the damage degree information 21 (step S3).

Next, the subtree attack easiness degree calculation unit 11 calculates the attack easiness degree for each subtree in accordance with the easiness degree of each included leaf by using the easiness degree information 102, the condition matching status information 22 input by the analyst using the input terminal 2, and the tree structure information 101 (step S4).

Next, the priority calculation unit 12 receives the damage degree information 21 generated by the analyst from the input terminal 2. Then, the priority calculation unit 12 calculates the subtree priority indicating the priority of a countermeasure against an attack for each subtree by using the damage degree information 21 and the attack easiness degree of each subtree such that the priority of a subtree whose attack is achieved more easily and whose damage is larger is higher (step S5).

The output unit 13 creates and outputs a list indicating the priority of the subtrees for which the countermeasure against the attack is taken in accordance with the subtree priority calculated by the priority calculation unit 12 (step S6).

As described above, the information processing device according to the present embodiment calculates the attack easiness degree for each subtree by using the tree structure information of an attack tree in which an attack on the machine learning system is assumed, the attack easiness degree of each leaf, and the condition matching status information indicating establishment or non-establishment of each leaf. Further, the information processing device determines the subtree priority of the subtree for which a countermeasure against an attack is taken by using the magnitude of damage for each type of damage and the attack easiness degree of each subtree and provides the subtree priority for the user.

Thus, for the subtree for which the countermeasure against the attack is taken, the user can obtain the priority in which the magnitude of a risk of each subtree is evaluated on the basis of the magnitude of damage and the easiness of the attack. Therefore, the user can efficiently select a subtree for which a countermeasure is taken against an attack, which makes it possible to easily prevent an attack on the machine learning system and to improve the security of the machine learning system. Note that the easiness degree and the magnitude of damage have been used, but may be replaced with a degree of difficulty (the degree of difficulty is higher as the value is larger) and the magnitude of damage (the damage is smaller as the value is larger).

(Hardware Configuration)

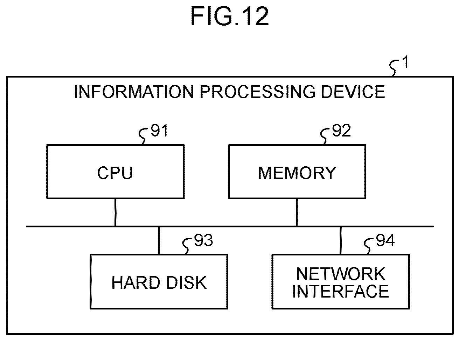

FIG. 12 is a hardware configuration diagram of the information processing device. The information processing device 1 described in the above embodiment can be implemented by a hardware configuration as in FIG. 12. For example, the information processing device 1 includes a central processing unit (CPU) 91, a memory 92, a hard disk 93, and a network interface 94. The CPU 91 is connected to the memory 92, the hard disk 93, and the network interface 94 via a bus.

The network interface 94 is an interface for communication between the information processing device 1 and an external device. The network interface 94 relays, for example, communication between the CPU 91 and the input terminal 2.

The hard disk 93 is an auxiliary storage device. The hard disk 93 implements functions of the storage unit 14 in FIG. 1. The hard disk 93 stores various programs including programs for implementing functions of the subtree attack easiness degree calculation unit 11 and the priority calculation unit 12 in FIG. 1.

The memory 92 is a main storage device. The memory 92 is, for example, a dynamic random access memory (DRAM).

The CPU 91 reads various programs stored in the hard disk 93, develops the programs in the memory 92, and executes the programs. Therefore, the CPU 91 implements the functions of the subtree attack easiness degree calculation unit 11, the priority calculation unit 12, and the output unit 13 in FIG. 1.

Reference Signs List

1     INFORMATION PROCESSING DEVICE

2     INPUT TERMINAL

11    SUBTREE ATTACK EASINESS DEGREE CALCULATION UNIT

12    PRIORITY CALCULATION UNIT

13    OUTPUT UNIT

14    STORAGE UNIT

21    DAMAGE DEGREE INFORMATION

22    CONDITION MATCHING STATUS INFORMATION

101   TREE STRUCTURE INFORMATION

102   EASINESS DEGREE INFORMATION

**Claims**

1.  A generation program that causes a computer to execute process comprising:

    acquiring tree structure information indicating a structure of an attack tree including a plurality of subtrees, the attack tree including pieces of information of a plurality of first nodes each of which is a root node of the plurality of subtrees and with which information indicating an attack that is established is associated and a plurality of second nodes that is hierarchically connected to each of the plurality of first nodes and with which a first condition for establishing the attack is associated;
    acquiring a damage degree in a case where the attack associated with each of the plurality of first nodes is established;
    acquiring a first easiness degree indicating easiness of satisfying the first condition associated with each end node among the plurality of second nodes;
    calculating a second easiness degree indicating easiness of the attack for each of the plurality of first nodes based on the acquired tree structure information and the acquired first easiness degree;
    calculating, for each of the plurality of first nodes, priority for taking a countermeasure against the attack associated with the first node based on the damage degree and the second easiness degree; and
    outputting the priority and information indicating the subtree including the first node corresponding to the priority.

2.  The generation program according to claim 1 for causing the computer to execute processing of:

    further acquiring condition matching status information indicating whether or not each of the first conditions associated with the respective end nodes among the plurality of second nodes is satisfied; and
    calculating the second easiness degree based on the acquired condition matching status information in addition to the tree structure information and the first easiness degree.

3.  The generation program according to claim 1, wherein:

the processing of calculating the second easiness degree for each of the plurality of first nodes includes processing of
executing the following processing from the end nodes toward a higher hierarchy among the plurality of second nodes of each subtree, the following processing including processing of
in a case where the second node is an operator and the first condition associated with the operator is a logical sum, calculating a value larger than a maximum value of the first easiness degrees associated with other plurality of the second nodes connected to a lower hierarchy of the operator as an easiness degree of a node connected to a higher hierarchy of the operator, and
in a case where the second node is an operator and the first condition associated with the operator is a logical product, calculating a value smaller than a minimum value of the first easiness degrees associated with other plurality of the second nodes connected to a lower hierarchy of the operator as an easiness degree of a node connected to a higher hierarchy of the operator.

4. A generation method that causes a computer to execute process comprising:

acquiring tree structure information indicating a structure of an attack tree including a plurality of subtrees, the attack tree including pieces of information of a plurality of first nodes each of which is a root node of the plurality of subtrees and with which information indicating an attack that is established is associated and a plurality of second nodes that is hierarchically connected to each of the plurality of first nodes and with which a first condition for establishing the attack is associated;
acquiring a damage degree in a case where the attack associated with each of the plurality of first nodes is established;
acquiring a first easiness degree indicating easiness of satisfying the first condition associated with each end node among the plurality of second nodes;
calculating a second easiness degree indicating easiness of the attack for each of the plurality of first nodes based on the acquired tree structure information and the acquired first easiness degree;
calculating, for each of the plurality of first nodes, priority for taking a countermeasure against the attack associated with the first node based on the damage degree and the second easiness degree; and
outputting the priority and information indicating the subtree including the first node corresponding to the priority.

5. An information processing device comprising:

a subtree attack easiness degree calculation unit that acquires tree structure information indicating a structure of an attack tree including a plurality of subtrees, the attack tree including pieces of information of a plurality of first nodes each of which is a root node of the plurality of subtrees and with which information indicating an attack that is established is associated and a plurality of second nodes that is hierarchically connected to each of the plurality of first nodes and with which a first condition for establishing the attack is associated, acquires a first easiness degree indicating easiness of satisfying the first condition associated with each end node among the plurality of second nodes, and calculates a second easiness degree indicating easiness of the attack for each of the plurality of first nodes based on the acquired tree structure information and the acquired first easiness degree;
a priority calculation unit that acquires a damage degree in a case where the attack associated with each of the plurality of first nodes is established and calculates, for each of the plurality of first nodes, priority for taking a countermeasure against the attack associated with the first node based on the damage degree and the second easiness degree calculated by the subtree attack easiness degree calculation unit; and
an output unit that outputs the priority calculated by the priority calculation unit and information indicating the subtree including the first node corresponding to the priority.

# FIG.1

# FIG.2

Fault tree diagram:

- **ATTACKABLE IN ATTACK SCENARIO A1**
  - **AND**
    - **ATTACKER CAN ACCESS MODEL (A1)**
      - **OR**
        - **ATTACKER CAN PERFORM INFERENCE AND OBTAIN RESULT (A1)**
          - **AND**
            - CONDITION #2B ATTACKER CAN PERFORM INFERENCE PROCESSING ABOUT 1000 TIMES OR MORE
            - CONDITION #3A ATTACKER CAN OBTAIN OUTPUT RESULT
        - CONDITION #6C ATTACKER CAN OBTAIN TRAINED MODEL
    - **ATTACKER CAN OBTAIN RELEVANT DATA (A1)**
      - **OR**
        - CONDITION #4B ATTACKER CAN OBTAIN ONE OR MORE PIECES OF SYSTEM DATA
        - CONDITION #7A ATTACKER CAN OBTAIN ONE OR MORE PIECES OF SIMILAR DATA

# FIG.3

101

(#6C OR (#2B AND #3A)) AND (#4B OR #7A)

# FIG.4

102

CONDITION #2B : 7
CONDITION #3A : 9
CONDITION #4B : 5
CONDITION #6C : 1
CONDITION #7A : 7

# FIG.5

22

```
CONDITION #2B : TRUE
CONDITION #3A : TRUE
CONDITION #4B : TRUE
CONDITION #6C : FALSE
CONDITION #7A : TRUE
```

# FIG.6

21

```
ERRONEOUS DETERMINATION : 9
LEAKAGE OF TRAINING DATA  : 7
LEAKAGE OF MODEL          : 1
...
```

# FIG.7

130

1: SCENARIO A1
2: SCENARIO P2
3: SCENARIO X4
...

## FIG.8

$6.3-((10-8.5)/10)\times 6.3$
$=5.355$

**ATTACKABLE IN ATTACK SCENARIO A1** ~201

AND

$6.3$

**ATTACKER CAN ACCESS MODEL (A1)** 203~

$7+(5/10)\times(10-7)=8.5$

**ATTACKER CAN OBTAIN RELEVANT DATA (A1)** ~202

OR

OR

$7-((10-9)/10)\times 7$
$=6.3$

204~ **ATTACKER CAN PERFORM INFERENCE AND OBTAIN RESULT (A1)**

1, FALSE

**CONDITION #6C ATTACKER CAN OBTAIN TRAINED MODEL**

5, TRUE

**CONDITION #4C ATTACKER CAN OBTAIN ONE OR MORE PIECES OF SYSTEM DATA**

7, TRUE

**CONDITION #7A ATTACKER CAN OBTAIN ONE OR MORE PIECES OF SIMILAR DATA**

AND

7, TRUE

**CONDITION #2B ATTACKER CAN PERFORM INFERENCE PROCESSING ABOUT 1000 TIMES OR MORE**

9, TRUE

**CONDITION #3A ATTACKER CAN OBTAIN OUTPUT RESULT**

# FIG.9

$$3-((10-5)/10)\times3=3.0-1.5=1.5$$
$$1.5-((10-9)/10)\times1.5=1.35$$
$$1.35-((10-10)/10)\times1.35=1.35$$

ATTACKABLE IN ATTACK SCENARIO X5 — 211

AND

3, TRUE — CONDITION #2D ATTACKER CAN PERFORM INFERENCE PROCESSING ABOUT 1 MILLION TIMES OR MORE

9, TRUE — CONDITION #3A ATTACKER CAN OBTAIN OUTPUT RESULT

5, TRUE — CONDITION #4A ATTACKER CAN OBTAIN META-INFORMATION OF DATA OF AI SYSTEM

10-0=10 — DATA TO BE HANDLED IS NOT TABLE DATA (X5) — 212

NOT

5, FALSE — CONDITION #8A DATA TO BE HANDLED IS TABLE DATA

EP 4 654 093 A1

## FIG.10

$$1.26-((10-5.2)/10)\times 1.26$$
$$=0.6552$$

ATTACKABLE IN ATTACK SCENARIO I2 — 221

AND

1.26

ATTACKER CAN ACCESS MODEL (I2) — 223

5.2

ATTACKER CAN OBTAIN MANY PIECES OF RELEVANT DATA (I2) — 222

OR

OR

$$2-((10-7)/10)\times 2=1.4$$
$$1.4-((10-9)/10)\times 1.4=1.26$$

ATTACKER CAN PERFORM INFERENCE AND OBTAIN RESULT AND GRADIENT (I2) — 224

1, FALSE

CONDITION #6C ATTACKER CAN OBTAIN TRAINED MODEL

3.5, FALSE

CONDITION #4D ATTACKER CAN OBTAIN MANY (1000 OR MORE) PIECES OF SYSTEM DATA

5.2, TRUE

CONDITION #7C ATTACKER CAN OBTAIN MANY (1000 OR MORE) PIECES OF SIMILAR DATA

AND

7, TRUE

CONDITION #2B ATTACKER CAN PERFORM INFERENCE PROCESSING ABOUT 1000 TIMES OR MORE

9, TRUE

CONDITION #3A ATTACKER CAN OBTAIN OUTPUT RESULT

2, TRUE

CONDITION # 6B ATTACKER CAN OBTAIN GRADIENT

# FIG.11

START

CONSTRUCT ATTACK TREE BY EXPERT AND STORE TREE STRUCTURE INFORMATION AND EASINESS DEGREE INFORMATION ~S1

DETERMINE ESTABLISHMENT STATUSES OF LEAVES OF ATTACK TREE BY ANALYST AND GENERATE CONDITION MATCHING STATUS INFORMATION ~S2

CALCULATE DAMAGE DEGREE BY ANALYST ~S3

CALCULATE ATTACK EASINESS DEGREE FOR EACH SUBTREE BY USING EASINESS DEGREE INFORMATION, CONDITION MATCHING STATUS INFORMATION, AND TREE STRUCTURE INFORMATION ~S4

CALCULATE SUBTREE PRIORITY BY USING DAMAGE DEGREE INFORMATION AND ATTACK EASINESS DEGREE OF EACH SUBTREE ~S5

CREATE AND OUTPUT LIST INDICATING PRIORITY OF SUBTREES FOR WHICH COUNTERMEASURE IS TAKEN ~S6

END

# FIG.12

INFORMATION PROCESSING DEVICE

1

91
CPU

92
MEMORY

93
HARD DISK

94
NETWORK INTERFACE

## INTERNATIONAL SEARCH REPORT

| International application No. |
| --- |
| **PCT/JP2023/000967** |

| A. | CLASSIFICATION OF SUBJECT MATTER |
| --- | --- |

*G06N 20/00*(2019.01)i; *G06F 21/57*(2013.01)i
FI:    G06N20/00; G06F21/57 370

According to International Patent Classification (IPC) or to both national classification and IPC

| B. | FIELDS SEARCHED |
| --- | --- |

Minimum documentation searched (classification system followed by classification symbols)

G06N20/00; G06F21/57

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | 森川 郁也 ほか, 敵対的機械学習のための脅威分析手法の提案, コンピュータセキュリティシンポジウム2019論文集, 14 October 2019, pp. 1370-1377, ISSN 1882-0840, (MORIKAWA, Ikuya et al. A Proposal of Threat Analysis for Adversarial Machine Learning. Proceedings of Computer Security Symposium 2019.) in particular, "3. Threat analysis", "4. Suggested technique", fig. 3-4 | 1, 3-5 |
| Y | | 2 |
| Y | 矢嶋 純 ほか, 開発エンジニア向け機械学習セキュリティ脅威分析技術, 2022年暗号と情報セキュリティシンポジウム予稿集, 18 January 2022, pp. 1-8, (YAJIMA, Jun et al. A Threat Analysis Method on Machine Learning Security for System Development Engineers.), non-official translation (Preprints of 2022 Symposium on Cryptography and Information Security) in particular, "6.3 Threat analysis techniques for development engineers" | 2 |

☐ Further documents are listed in the continuation of Box C.          ☐ See patent family annex.

| * Special categories of cited documents: | "T" later document published after the international filing date or priority date and not in conflict with the application but cited to understand the principle or theory underlying the invention |
| --- | --- |
| "A"  document defining the general state of the art which is not considered to be of particular relevance | |
| "E"  earlier application or patent but published on or after the international filing date | "X" document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&" document member of the same patent family |

| Date of the actual completion of the international search | Date of mailing of the international search report |
| --- | --- |
| **28 March 2023** | **04 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**REFERENCES CITED IN THE DESCRIPTION**

**Patent documents cited in the description**

- WO 2018134909 A